# EUROPEAN PATENT APPLICATION

(11) **EP 4 362 386 A1**
(43) Date of publication of application: **01.05.2024**
(21) Application number: 22306645.7
(22) Date of filing: 28.10.2022
(51) Int. Cl.: H04L 9/32

(54) **SYSTEM AND METHOD FOR PROVISIONING A PHYSICAL SECURITY TOKEN**

(71) Applicant: Genetec Inc., Saint-Laurent, QC H4S 2A4 (CA)
(72) Inventor: FAUVET, Jeremy, 45430 Checy (FR); LEDEBT, Hervé, 91470 Les Molieres (FR); DE LA HOZ, Damien, 69007 Lyon (FR)
(74) Representative: Plasseraud IP

(57) **Abstract**

A computer-implemented system and methods for provisioning a security token are provided. An example method may include steps of: receiving, at a secure appliance and from a remote server, a command to encode a set of access information into the physical security token; generating, at the secure appliance, encrypted access information, comprising: providing the set of access information to a secure cryptoprocessor; and instructing the secure cryptoprocessor to use a cryptographic key stored in the secure cryptoprocessor to encrypt the set of access information; obtaining, from a security token reader, an indication of a presence of the physical security token being inserted into or presented to the security token reader; and provisioning the physical security token by transmitting, via a secured channel, the encrypted access information from the secure appliance to the security token reader for encoding the physical security token with the encrypted access information.

## Description

### FIELD

The present disclosure generally relates to secure management and provisioning of physical security tokens such as access cards.

### BACKGROUND

Access control systems typically consist of one or more computer appliances acting as access controllers, a plurality of sensors and relays, and a plurality of smart card readers. The controller may be a computer system that has a database of cardholders and access policy and it may be responsible for applying the access policy. The sensors and relays are used to monitor doors states and can unlock or bar access to doors or other access points when required. Smart card readers communicate with user identification badges or smart cards, and retrieve the users' credentials. That information is conveyed to the controller, for example by the means of an RS485 bus, a network connection or other communication mechanism. The controller then decides whether to activate the door strike relay (or other locking mechanism, for instance a magnetic lock).

In low security systems, an user identification badge or smart card often is an RFID card or fob that provides a serial number or ID when prompted. The serial number or ID received at the card reader is transmitted to the access controller that checks if the serial number is permitted access.

Prior to the user identification badge or smart card being assigned to a particular user, the user identification badge or smart card needs to be provisioned with an access policy or rule by the party that issues said user identification badge or smart card. The access policy or rule may specify when the badge or smart card may be used to access a physical building or room.

The provisioning is typically done by presenting the user identification badge or smart card at close proximity to, or by inserting the badge or smart card into, an encoder device that is connected to a computer. The encoder device may store encoding information such as the cryptographic key(s) used to encode the user identification badge or smart card, as well as user information that has been provisioned to the badge or smart card. Other approaches consider maintaining the encoding information within a workstation used to perform the encoding, or within the backend server of the system. Any mishandling or loss of the encoder device, of the workstation, or inappropriate access to the backend server may result in a breach of security and/or theft of user identities.

### SUMMARY

This summary includes an overview of some examples for the purpose of illustration. Additional details are provided in the Detailed Description. While existing approaches for encoding physical security tokens are suitable for their purposes, they are vulnerable to both physical theft of the encoding devices, as well as to security breaches revealing the secret information (e.g., cryptographic keys) used to encode the physical security tokens. As such, approaches to encoding physical security tokens (access cards, key fobs, etc.) which do not expose the components used to physical theft or security breaches are desirable.

To this end, the present disclosure describes (in one or more example implementations) methods, systems, and computer-readable media for securely provisioning physical security tokens using a secure appliance. The secure appliance may be any type of computer appliance which is capable of accessing securely-stored encryption keys and of performing (directly or indirectly) encryption of information using the securely-stored encryption keys.

The secure appliance receives, from a remote server, a command to encode a set of access information into the physical security token. Part or all of the access information may be provided by the remote server, be already available to the secure appliance, or be otherwise obtainable thereby. The secure appliance generates encrypted access information by providing the set of access information to a secure cryptoprocessor and by instructing the secure cryptoprocessor to use a cryptographic key stored therein to encrypt the set of access information. The secure appliance obtains an indication of a presence of the physical security token from a security token reader: the physical security token may be presented to the security token reader, may be inserted into the security token reader, or may be otherwise accessible thereby. The secure appliance then provisions the physical security token by transmitting, via a secured channel, the encrypted access information to the security token reader for encoding the physical security token with the encrypted access information.

In accordance with an aspect, there is provided a computer-method of securely provisioning a physical security token, the method may include steps of: receiving, at a secure appliance and from a remote server, a command to encode a set of access information into the physical security token; generating, at the secure appliance, encrypted access information, comprising: providing the set of access information to a secure cryptoprocessor; and instructing the secure cryptoprocessor to use a cryptographic key stored in the secure cryptoprocessor to encrypt the set of access information; obtaining, from a security token reader, an indication of a presence of the physical security token being inserted into or presented to the security token reader; and provisioning the physical security token by transmitting, via a secured channel, the encrypted access information from the secure appliance to the security token reader for encoding the physical security token with the encrypted access information.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In at least some embodiments according to one or more of the embodiments described herein, the secure cryptoprocessor may be a secure access module (SAM) providing storage for the cryptographic key.

In at least some embodiments according to one or more of the embodiments described herein, receiving the command to encode the set of access information comprises receiving the set of access information from the remote server.

In at least some embodiments according to one or more of the embodiments described herein, the received set of access information is arranged in a predetermined structure for encoding.

In at least some embodiments according to one or more of the embodiments described herein, receiving the set of access information comprises receiving a set of credential information and an access policy.

In at least some embodiments according to one or more of the embodiments described herein, the set of access information to the secure cryptoprocessor comprises placing the set of access information on a bus of the secure appliance via which the secure cryptoprocessor is coupled to secure appliance.

In at least some embodiments according to one or more of the embodiments described herein, providing the set of access information to the secure cryptoprocessor comprises transmitting the set of access information to the secure cryptoprocessor over a network.

In at least some embodiments according to one or more of the embodiments described herein, providing the set of access information to the secure cryptoprocessor comprises preliminarily encrypting the set of access information by the secure appliance using a second cryptographic key shared between the secure appliance and the secure cryptoprocessor.

In at least some embodiments according to one or more of the embodiments described herein, provisioning the physical security token is performed without the security token reader storing any of the encrypted access information.

In at least some embodiments according to one or more of the embodiments described herein, the method further include implementing the secured channel via RS-485.

In at least some embodiments according to one or more of the embodiments described herein, generating the encrypted access information may include selecting the secure cryptoprocessor from a plurality of secure cryptoprocessors available to the secure appliance based on the command received from the remote server.

In at least some embodiments according to one or more of the embodiments described herein, selecting the secure cryptoprocessor from the plurality of secure cryptoprocessors is further based on at least one of: a credential information received from the remote server, an access policy received from the remote server, a privilege level associated with one or more cryptographic keys stored in the secure cryptoprocessor, a load balancing factor, and a predetermined schedule.

In at least some embodiments according to one or more of the embodiments described herein, generating the encrypted access information comprises selecting the cryptographic key from a plurality of cryptographic keys stored in the secure cryptoprocessor based on the command received from the remote server.

In at least some embodiments according to one or more of the embodiments described herein, selecting the cryptographic key from the plurality of cryptographic keys is further based on at least one of: a credential information received from the remote server, an access policy received from the remote server, a privilege level associated the cryptographic key, and a predetermined schedule.

In at least some embodiments according to one or more of the embodiments described herein, the security token reader is installed at an access control point at an entrance to: a building, a floor, or a room.

In at least some embodiments according to one or more of the embodiments described herein, the security token reader is coupled to a computing device connected to the remote server.

In at least some embodiments according to one or more of the embodiments described herein, the method may include, prior to transmitting the encrypted access information to the security token reader for provisioning the physical security token: determining a requested token identifier from the set of access information; obtaining a presented token identifier of the physical security token inserted into or presented to the security token reader; and transmitting the encrypted access information to the security token reader for provisioning the physical security token only when the requested token identifier matches the presented token identifier.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, the method may include issuing a command from the secure appliance to the security token reader to instruct the security token reader to operate in a transparent mode.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, obtaining the indication of the presence of the physical security token comprises obtaining an indication that the physical security token is located in proximity to the security token reader.

In accordance with another aspect, there is provided a computer-method of securely provisioning a physical security token, the method may include steps of: receiving, at a secure appliance and from a remote server, a command to encode a set of access information into the physical security token; generating, at the secure appliance, encrypted access information, comprising: providing the set of access information to a secure cryptoprocessor; and instructing the secure cryptoprocessor to use a cryptographic key stored in the secure cryptoprocessor to encrypt the set of access information; obtaining, from a transparent security token reader, an indication of a presence of the physical security token being inserted into or presented to the transparent security token reader; and provisioning the physical security token by transmitting, via a secured channel, the encrypted access information from the secure appliance to the transparent security token reader for encoding the physical security token with the encrypted access information.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In accordance with yet another aspect, there is provided a method for securely provisioning a physical security token, the method including: providing a security token reader programmed to operate in a transparent mode; providing a remote server executing security software; providing a secure appliance coupled to the security token reader and the remote server, the secure appliance having access to a secure cryptoprocessor for encrypting information; obtaining, at the remote server, a request to encode a physical security token to be assigned to a user; sending, from the remote server to the secure appliance, a command to encode a set of access information into the physical security token; generating, at the secure appliance, encrypted access information based on the set of access information using a cryptographic key stored in the secure cryptoprocessor; in response to obtaining an indication from the security token reader of a presence of the physical security token being inserted into or presented to the security token reader, transmitting the encrypted access information from the secure appliance to the security token reader; and transparently transmitting the encrypted access information from the security token reader to the physical security token for encoding of the encrypted access information within the physical security token.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In at least some embodiments according to one or more of the embodiments described herein, the secure cryptoprocessor may be a secure access module (SAM) providing storage for the cryptographic key.

In at least some embodiments according to one or more of the embodiments described herein, the set of access information is arranged in a predetermined structure for encoding.

In at least some embodiments according to one or more of the embodiments described herein, sending the set of access information comprises sending a set of credential information and an access policy.

In at least some embodiments according to one or more of the embodiments described herein, generating the encrypted access information may include: providing the set of access information to the secure cryptoprocessor; and instructing the secure cryptoprocessor to use the cryptographic key stored in the secure cryptoprocessor to encrypt the set of access information.

In at least some embodiments according to one or more of the embodiments described herein, providing the set of access information to the secure cryptoprocessor comprises preliminarily encrypting the set of access information by the secure appliance using a second cryptographic key shared between the secure appliance and the secure cryptoprocessor.

In at least some embodiments according to one or more of the embodiments described herein, encoding the physical security token is performed without the security token reader storing any of the encrypted access information.

In at least some embodiments according to one or more of the embodiments described herein, generating the encrypted access information comprises selecting the secure cryptoprocessor from a plurality of secure cryptoprocessors available to the secure appliance based on the command received from the remote server.

In at least some embodiments according to one or more of the embodiments described herein, generating the encrypted access information comprises selecting the cryptographic key from a plurality of cryptographic keys stored in the secure cryptoprocessor based on the command received from the remote server.

In at least some embodiments according to one or more of the embodiments described herein, selecting the cryptographic key from the plurality of cryptographic keys is further based on at least one of: a credential information received from the remote server, an access policy received from the remote server, a privilege level associated the cryptographic key, and a predetermined schedule.

In at least some embodiments according to one or more of the embodiments described herein, the security token reader is coupled to a computing device connected to the remote server.

In at least some embodiments according to one or more of the embodiments described herein, sending the command to encode the set of access information into the physical security token comprises encrypting the command prior to sending the command from the remote server to the secure appliance.

In accordance with yet another aspect, there is provided a computer-implemented system for provisioning a physical security token, comprising: a communication interface; at least one processor; memory in communication with said at least one processor; and instructions stored in said memory, which when executed at said at least one processor causes said system to: receive, at a secure appliance and from a remote server, a command to encode a set of access information into the physical security token; generate, at the secure appliance, encrypted access information, the generating comprising: providing the set of access information to a secure cryptoprocessor; and instructing the secure cryptoprocessor to use a cryptographic key stored in the secure cryptoprocessor to encrypt the set of access information; obtain, from a security token reader, an indication of a presence of the physical security token being inserted into or presented to the security token reader; and provision the physical security token by transmitting, via a secured channel, the encrypted access information from the secure appliance to the security token reader for encoding the physical security token with the encrypted access information.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In at least some embodiments according to one or more of the embodiments described herein, the secure cryptoprocessor may be a secure access module (SAM) providing storage for the cryptographic key.

In at least some embodiments according to one or more of the embodiments described herein, receiving the command to encode the set of access information comprises receiving the set of access information from the remote server.

In at least some embodiments according to one or more of the embodiments described herein, the received set of access information is arranged in a predetermined structure for encoding.

In at least some embodiments according to one or more of the embodiments described herein, receiving the set of access information comprises receiving a set of credential information and an access policy.

In at least some embodiments according to one or more of the embodiments described herein, providing the set of access information to the secure cryptoprocessor comprises placing the set of access information on a bus of the secure appliance via which the secure cryptoprocessor is coupled to secure appliance.

In at least some embodiments according to one or more of the embodiments described herein, providing the set of access information to the secure cryptoprocessor comprises transmitting the set of access information to the secure cryptoprocessor over a network.

In at least some embodiments according to one or more of the embodiments described herein, providing the set of access information to the secure cryptoprocessor comprises preliminarily encrypting the set of access information by the secure appliance using a second cryptographic key shared between the secure appliance and the secure cryptoprocessor.

In at least some embodiments according to one or more of the embodiments described herein, provisioning the physical security token is performed without the security token reader storing any of the encrypted access information.

In at least some embodiments according to one or more of the embodiments described herein, generating the encrypted access information comprises selecting the secure cryptoprocessor from a plurality of secure cryptoprocessors available to the secure appliance based on the command received from the remote server.

In at least some embodiments according to one or more of the embodiments described herein, selecting the secure cryptoprocessor from the plurality of secure cryptoprocessors is further based on at least one of: a credential information received from the remote server, an access policy received from the remote server, a privilege level associated with one or more cryptographic keys stored in the secure cryptoprocessor, a load balancing factor, and a predetermined schedule.

In at least some embodiments according to one or more of the embodiments described herein, generating the encrypted access information comprises selecting the cryptographic key from a plurality of cryptographic keys stored in the secure cryptoprocessor based on the command received from the remote server.

In at least some embodiments according to one or more of the embodiments described herein, selecting the cryptographic key from the plurality of cryptographic keys is further based on at least one of: a credential information received from the remote server, an access policy received from the remote server, a privilege level associated the cryptographic key, and a predetermined schedule.

In at least some embodiments according to one or more of the embodiments described herein, the security token reader is installed at an access control point at an entrance to: a building, a floor, or a room.

In at least some embodiments according to one or more of the embodiments described herein, the security token reader is coupled to a computing device connected to the remote server.

In at least some embodiments according to one or more of the embodiments described herein, the instructions, when executed, further cause the system to: issue a command from the secure appliance to the security token reader to instruct the security token reader to operate in a transparent mode.

In accordance with one aspect, there is provided another method for securely provisioning a physical security token, the method including: obtaining, at a remote server, a request to encode a physical security token to be assigned to a user; sending, from the remote server to a secure appliance, a command to encode a set of access information into the physical security token, the secure appliance having access to a secure cryptoprocessor for encrypting information; generating, at the secure appliance, encrypted access information based on the set of access information using a cryptographic key stored in the secure cryptoprocessor; in response to obtaining an indication from a security token reader of a presence of the physical security token being inserted into or presented to the security token reader, transmitting the encrypted access information from the secure appliance to the security token reader; and transparently transmitting the encrypted access information from the security token reader to the physical security token for encoding of the encrypted access information within the physical security token.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, sending the command to encode the set of access information into the physical security token comprises encrypting the command prior to sending the command from the remote server to the secure appliance.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In accordance with another aspect, there is provided a system for securely provisioning a physical security token, the system including: a security token reader programmed to operate in a transparent mode; a remote server executing security software; and a secure appliance coupled to the security token reader and the remote server, the secure appliance having access to a secure cryptoprocessor for encrypting information; the remote server being configured to: obtain, a request to encode a physical security token to be assigned to a user; send, from the remote server to the secure appliance, a command to encode a set of access information into the physical security token; the secure appliance being configured to: generate encrypted access information based on the set of access information using a cryptographic key stored in the secure cryptoprocessor; and in response to obtaining an indication from the security token reader of a presence of the physical security token being inserted into or presented to the security token reader, transmit the encrypted access information to the security token reader; and the security token reader being configured to transparently transmit the encrypted access information from the secure appliance to the physical security token for encoding of the encrypted access information within the physical security token.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, sending the command to encode the set of access information into the physical security token comprises encrypting the command prior to sending the command from the remote server to the secure appliance.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

In accordance with still another aspect, there is provided a non-transitory computer-readable storage medium storing instructions which when executed cause at least one processor to perform: receiving, at a secure appliance and from a remote server, a command to encode a set of access information into the physical security token; generating, at the secure appliance, encrypted access information, comprising: providing the set of access information to a secure cryptoprocessor; and instructing the secure cryptoprocessor to use a cryptographic key stored in the secure cryptoprocessor to encrypt the set of access information; obtaining, from a security token reader, an indication of a presence of the physical security token being inserted into or presented to the security token reader; and provisioning the physical security token by transmitting, via a secured channel, the encrypted access information from the secure appliance to the security token reader for encoding the physical security token with the encrypted access information.

In at least some embodiments according to one or more of the embodiments described herein, provisioning the physical security token comprises instructing the security token reader to transmit the encrypted access information to the physical security token unchanged.

In at least some embodiments according to one or more of the embodiments described herein, provisioning the physical security token by transmitting the encrypted access information is performed in response to obtaining the indication.

In at least some embodiments according to one or more of the embodiments described herein, obtaining the indication of the presence of the physical security token comprises obtaining an indication that the physical security token is located within a reading zone of the security token reader.

In at least some embodiments according to one or more of the embodiments described herein, the indication of the presence of the physical security token being inserted into or presented to the security token reader may be obtained by the physical security token being in close proximity to the security token reader.

Other features will become apparent from the drawings in conjunction with the following description.

### BRIEF DESCRIPTION OF DRAWINGS

In the figures, embodiments are illustrated by way of example. It is to be expressly understood that the description and figures are only for the purpose of illustration and as an aid to understanding.

Embodiments will now be described, by way of example only, with reference to the following figures:
**FIG. 1** is a prior art system for provisioning an access card.
**FIG. 2A** is a schematic diagram illustrating a first architecture for provisioning a physical security token, in accordance with an embodiment.
**FIG. 2B** is a schematic diagram illustrating a second architecture for provisioning a physical security token, in accordance with an embodiment.
**FIG. 3** is an example schematic diagram of a server for generating a command to encode a set of access information into a physical security token, in accordance with an embodiment.
**FIG. 4** shows an example secure appliance that may be used to encrypt a set of access information, in accordance with an embodiment.
**FIG. 5** shows an example computing device that may be used to implement a Secure Appliance, in accordance with an embodiment.
**FIG. 6** shows a flow chart illustrating an example process performed by a Secure Appliance to provision a physical security token, in accordance with an embodiment.

### DETAILED DESCRIPTION

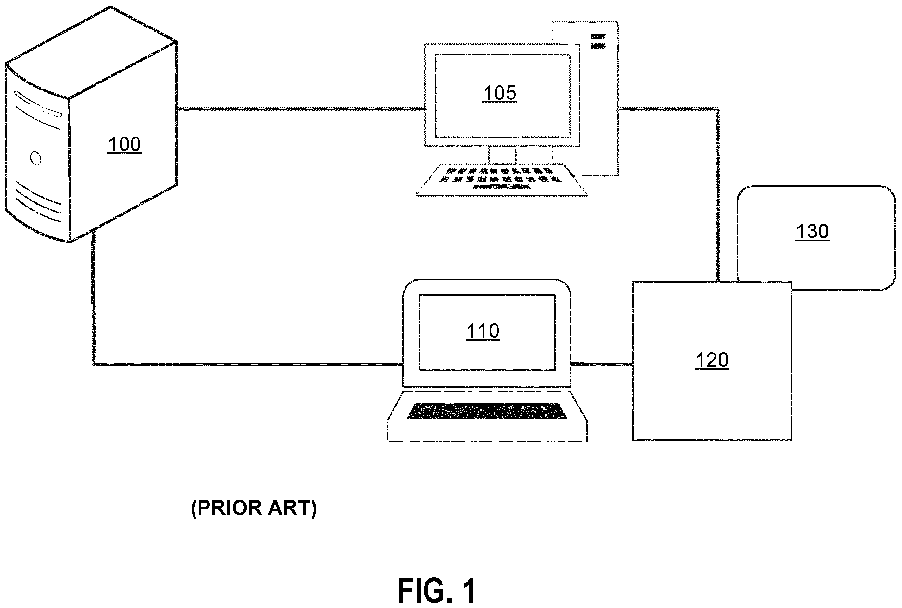

**FIG. 1** illustrates a prior art system for provisioning an access card 130. In this conventional architecture, encoding of the access card 130 is done via an encoder device 120 such as an encoder peripheral device 120, which may be a USB-type device connecting to a laptop computer 110 or a service desk computer 105. When a user is provided with a new access card 130, an operator at the service desk 105 or laptop computer 110 typically places the access card 130 on or into the encoder device 120, and send commands to the encoder device 120 with appropriate user and access policy information to provision or encode the access card 130. Once properly provisioned, the access card 130 may be used to access a physical building or room in accordance with the encoded access policy information.

A backend server 100 may store one or more cryptographic keys, the appropriate user and access policy information to provision or encode the access card 130, and send the information to the laptop computer 110 or the service desk computer 105 for encoding the access card 130. The laptop computer 110 or the service desk computer 105 then may process and send the information to the encoder device 120 for provisioning the access card 130.

In some cases, the encoder device 120 does not itself store any information, and simply encodes and transmits the information received from the laptop computer 110 or the service desk computer 105. Sometimes, the encoder device 120 may keep some information in a non-transitory memory for a short time following the encoding and provisioning. In still some other cases, the encoder device 120 itself stores the entire information used for encoding and provisioning. This can include the cryptographic keys used for encoding as well as the particular information to be encoded itself.

The conventional approach in **FIG. 1** is vulnerable in two ways. First, the information being stored in the backend server (e.g., cryptographic keys and/or information to encode) is vulnerable to breaches, whether via hacking, improper access, mismanagement, or the like, especially if the information is also stored elsewhere (e.g., service desk or laptop computers 105, 110). Second, in cases in which the laptop computer 110 or encoder device 120 stores the information for encoding (e.g., cryptographic keys and/or information to encode), both devices 110, 120 are vulnerable to physical theft. A person who steals the laptop computer 110 or encoder device 120 can obtain sensitive information to be encoded as well as the means to perform encoding or decoding, which would allow such a person to encode their own access cards.

In high security systems or applications, it is important and useful to ensure that user identification cannot be stolen, cloned or otherwise tampered with during and after provisioning of an access card (or similar apparatus) is done.

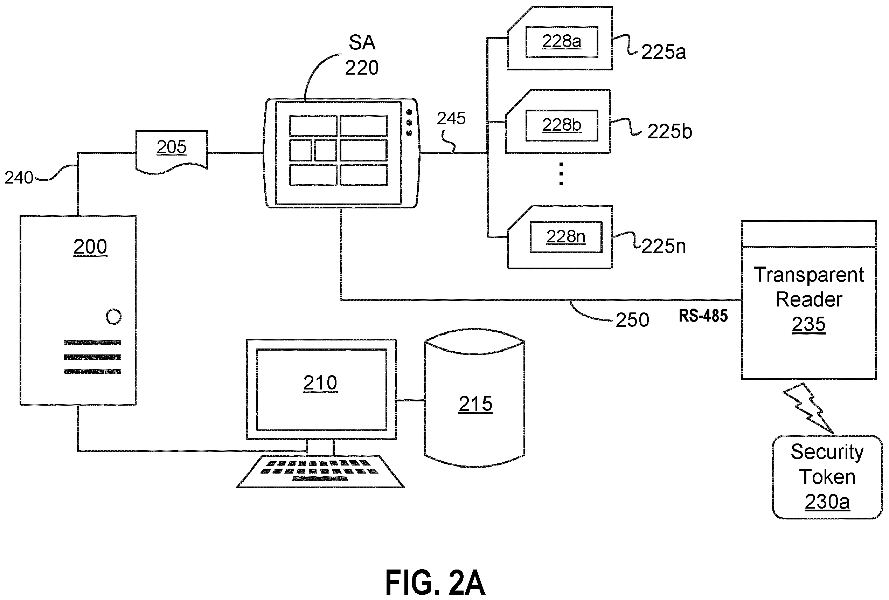

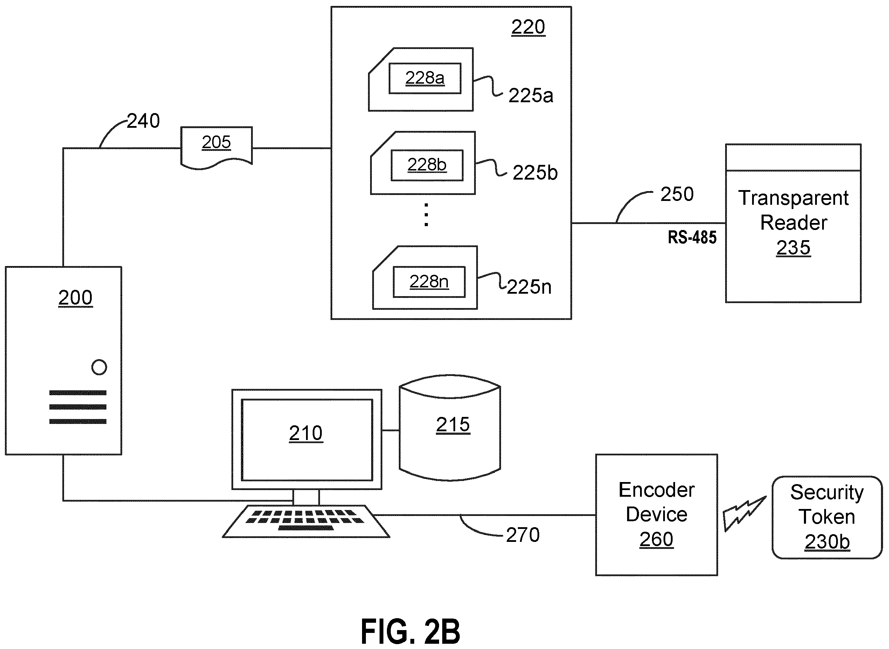

Referring now to **FIGs. 2A** and **2B**, which illustrate two schematic diagrams showing different example architectures for provisioning a physical security token 230a, 230b, which may include access cards, contactless smart cards, transit card, key fobs, or the like, are often used to securely store an encoded form of a set of access information. In some cases, the physical security token 230a, 230 may be implemented via another device: for instance, a smartphone or another electronic device may have the capability to store encoded access information and communicate with security token readers, thereby acting as a physical security token. For example, a virtual or electronic security token may be stored in a memory on the smart phone or electronic device, and may be activated via one or more user actions on the smart phone or electronic device, such as a tap or a click on an user interface of the smart phone or electronic device. An access information may include, for example, a user's credential information and access policy.

User's credential information may include private user information including, for example, one or more of: name, birthday, position, home address, and status (e.g., visitor, client or employee).

An access policy may include a set of rules defining how, when and where the user may access a physical building, complex, floor, and/or room. For example, an access policy may specify that the user may visit Building A, Floor 2, during 8 AM to 8 PM on work days. For another example, an access policy may specify that the user may visit Complex X during all days at all times. For yet another example, an access policy may define that the user, as a visitor, may visit Room Alpha only at 3-5PM at a specific date (e.g., October 30, 2022). The access policy may include an expiry date or time, and other aspects of a particular user's access to particular locations at particular times may also be defined as part of an access policy.

The access policy to be encoded for a physical security token 230a, 230b (herein referred to as "token" 230, 230a or 230b) may be decided based on the status or position of the user, as included in the user's credential information. Other factors may also apply, including the user's schedule or invitations to particular sites, and the like. The user's credential information and the access policy may be predefined and stored in a database, such as database 215, or a database within remote server 200. In some cases, the access information associated with the user (i.e., user's credential information and access policy) may be provided to the database 215 and/or the remote server 200 as part of an enrollment process, which may occur after the token 230a, 230b has been encoded. In at least some embodiments, database 215 may be accessible by the remote server 200, or forming part of the remote server 200. For example, the database 215 may be connected to the remote server 200 via a secure communication such as an Ethernet connection.

In at least some embodiments, the set of access information is arranged in a predetermined structure for encoding. The predetermined encoding structure may include, for example, a structure optimized for encryption. The encoding structure may itself act as a security mechanism, as the devices validating the tokens 230a, 230b (once provisioned and enrolled) may also validate whether the information provided by the tokens 230a, 230b is structured in accordance with the encoding structure. The encoding structure may be an XML table, for example, listing each of one or more user credential data items and each of one or more access policy data items. The server 200 may prepare the set of access information in the encoding structure prior to sending the structured set of access information to a secure appliance (SA) 220.

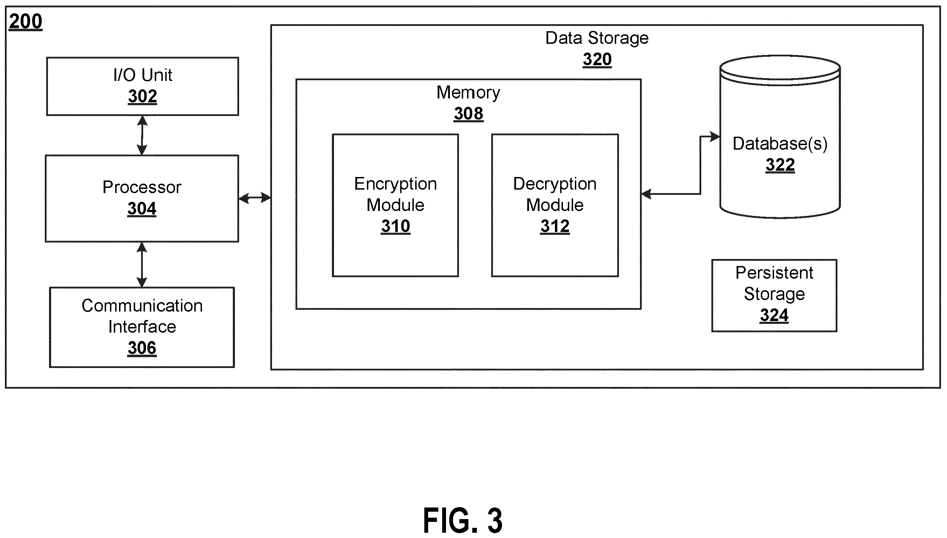

A workstation 210, which may be a laptop computer, a service desktop, or any other suitable type of computing device connected with a database 215, may be used to perform provisioning of a new token 230a, 230b. For example, an operator at the workstation 210 can send a request for encoding of the token 230a, 230b to the backend or remote server 200 via a secure connection (e.g., a communication link secured via TLS or SSL). The request may include, for example, user information entered by the operator or retrieved from the database 215, and if appropriate, a token identifier for the token 230a, 230b. The remote server 200 receives the request from the workstation 210, processes the request to generate a script 205, and transmits the script 205 to a secured appliance or a SA 220. A remote server 200 is further illustrated in FIG. 3, described herein.

The backend or remote server 200 may be located in a server room, and may be physically distanced from the SA 220. For example, the remote server 220 may be located at basement of Building A, while the SA 220 may be located at floor 5 of the Building A. Even though FIGs. 2A and 2B only illustrate one SA 220 connected to the server 200, the server 200 can be connected with multiple SAs 220, and the server 200 may itself be a distributed server employing multiple physical devices. A plurality of SAs 220 can be physically located throughout different locations of a building or complex, acting as edge devices. For example, there may be one, two or three SA(s) 220 per floor, each SA 220 may be connected via a secure connection 250 to one or more transparent reader devices 235. The secure connection 250 may be, for example, a communication link implemented using RS-485.

In at least some embodiments, a SA 220 can connect to the remote server 200 via secure connection 240, which may wired or via physical cable, e.g., a communication link implemented using RS-485. In at least some embodiments, a SA 220 can connect to the remote server 200 via secure wireless means, such as a secured VPN network that is encrypted using TLS or SSL. Thus, transmissions between the remote server 200 and the SA 220 may be encrypted. This may include commands and other data (e.g., a set of access information) sent from the remote server 200 to the SA 220 being encrypted prior to being sent.

The SA 220 may include, or be securely connected to one or more secure cryptoprocessors 225a, 225b, 225n. Each cryptoprocessor 225a, 225b, 225n may store one or more cryptographic keys. For example, cryptoprocessor 225a may store at least cryptographic key 228a (and additional cryptographic keys not shown in **FIG. 2A** or **2B**), cryptoprocessor 225b may store at least cryptographic key 228b (and additional cryptographic keys not shown in **FIG. 2A** or **2B**), and cryptoprocessor 225n may store at least cryptographic key 228n (and additional cryptographic keys not shown in **FIG. 2A** or **2B**).

The SA 220 may be configured to know the exact location of each cryptographic key 228a, 228b... 228n within each cryptoprocessors 225a, 225b, 225n, but does not store any copy of the cryptographic keys themselves. For instance, the SA 220 may be programmed so that it can issue a command to a particular one of the cryptoprocessors 225a, 225b, 225n, indicating a particular one of the cryptographic keys 228a, 228b... 228n stored therein, providing the particular cryptoprocessor with a set of data (e.g., the set of access information) to encrypt, and receive from the particular cryptoprocessor an encrypted copy of the set of data, encrypted using the particular cryptographic key.

For example, the SA 220 is configured to, based on the script 205 from the remote server 200, instruct the appropriate cryptoprocessor 225a, 225b or 225n to encode the received set of access information using the appropriate cryptographic key 228a, 228b, or 228n. The appointed cryptoprocessor 225a, 225b or 225n performs the encryption of the set of access information using the cryptographic key 228a, 228b, or 228n specified by SA 220, and sends the encrypted access information back to the SA 220, which then passes the encrypted access information to the transparent reader 235, which then provisions the token 230a.

For example, the SA 220 may store a respective location of each cryptographic key 228a, 228b... 228n within each cryptoprocessors 225a, 225b, 225n in a memory within the SA 220. An example location may be represented by, for example, a location-ID value pair including a location "XYZ" and a key ID value "12345", where "XYZ" may be the ID or serial number of the corresponding cryptoprocessor, and "12345" may be the key ID of the stored cryptographic key.

In at least some embodiments, the SA 220 may store, in addition to the respective location, a number of additional attributes associated with each respective cryptographic key(s) 228a, 228b... 228n within the memory within the SA 220. The additional attributes may include, for each respective cryptographic key 228a, 228b... 228n, one or more of: name, ID, serial number, type, activation date, expiry date, size, version, and the like.

The transparent reader 235 may include a radio-frequency (RF) interface (e.g., using a 13.56 MHz communication frequency (NFC), using RFID, using Bluetooth^{®}, etc.) active to detect a presence of an antenna contained within the token 230a, or can use electrical contacts instead of wireless coupling. The transparent reader 235 may define a reading zone within which the presence of physical security tokens (e.g., token 230a) can be detected, and within which token 230a can be read or written to. In the case of a RF-based transparent reader 235, the reading zone may be a three-dimensional space proximate to the transparent reader 235 within which communication with the antenna contained with the token 230a is possible. In the case of an electrical-contact-based transparent reader 235, the reading zone may be a slot or other receptacle within which the token 230a can be physically received to ensure a connection via the electrical contacts of the transparent reader 235 and the token 230a. To conserve power, the transparent reader 235 may operate various power-saving methods, including pulsed interrogation instead of a continuous interrogation. When a token 230a is detected, the RF interface transmits a signal that delivers power to the token 230a, thus powering a processor of token 230a for operation. The RF interface is configured to modulate and demodulate data transmitted between the token 230a and the reader 235. The logic controller of the reader 235 can be a microcontroller that communicates the data between the RF interface, the SA 220 and the network link interface.

In at least some embodiments, the SA 220 may physically house one or more cryptoprocessors 225a, 225b, 225n (as shown in **FIG. 2B**). In other embodiments, the SA 220 may be physically separated from one or more cryptoprocessors 225a, 225b, 225n but connected via a network, or via a secure connection 245, such as a RS-485 cable with appropriate communication protocol (e.g., SSCPv2 or OSDPv2), as shown in **FIG. 2A****.** In at least some embodiments, the SA 220 may physically house one or more cryptoprocessors, and be physically separated from and connected to one or more additional cryptoprocessors. SSCP stands for Smart & Secure Communication Protocol. OSDP stands for Open Supervised Device Protocol.

Network (or multiple networks) described herein is capable of carrying data and can involve wired connections, wireless connections, or a combination thereof. Network may involve different network communication technologies, standards and protocols, for example.

In at least some embodiments, one or more cryptoprocessors 225a, 225b, 225n may be physically inserted into a SA 220 to provide the set of access information to place the set of access information on a bus of the SA 220 via which the secure cryptoprocessors(s) is/are coupled to the SA 220.

The transparent reader 235 does not store any of the encrypted access information in any persistent manner, this is referred to as transparent encoding. For instance, the transparent reader 235 may act as a converter which transforms electrical signals produced by the SA 220 into signals transported via an electromagnetic field to the token 230a. In this fashion, the SA 220 and the token 230a are capable of communication substantially directly, with the transparent reader 235 solely converting the medium of communication. All the requisite encryption is performed at the appropriate cryptoprocessor 225a, 225b or 225n, using the cryptographic key 228a, 228b, or 228n stored in the respective cryptoprocessor 225a, 225b or 225n, as instructed by SA 220.

In at least some embodiments, the transparent reader 235 is preprogrammed, manufactured, or otherwise initially configured for operating in a transparent fashion, and the SA 220 need not explicitly command the transparent reader 235 to operate in a transparent fashion. In some other embodiments, the transparent reader 235 is a security token reader which is programmed or otherwise commanded to operate in a transparent mode, which may be different from one or more other modes of operation. In some cases, the SA 220 issues a command to the security token reader, prior to provisioning the physical security token, to instruct the security token reader to operate in the transparent mode. In this fashion, the security token reader acts as a transparent reader 235. The command may be issued before every provisioning operation performed by the SA 220, or may be performed at predetermined times, indicating to the security token reader that it should operate in the transparent mode for a certain time period, or for certain operations (e.g., physical security token provisioning operations). For example, as part of provisioning the token 230a, the SA 220 instructs the transparent reader 235 to transmit the encrypted access information to the token 230a unchanged (i.e., without any modification).

The encrypted access information is sent from the SA 220 to the transparent reader 235 via a secured channel 250, which may be implemented using RS-485 cable and/or secured via an appropriate communication protocol (e.g., SSCPv2 or OSDPv2). Even if the transparent reader 235 were to temporarily store any information, it is much less vulnerable to physical theft than the encoder device 120 of the prior art system shown in **FIG. 1**, as the transparent reader 235 would typically be affixed to a wall or other structure in a secure manner. In at least some embodiments, the workstation 210 also does not store any of the user information or access policy in a persistent manner, that is, user information or access policy, if temporarily stored in database 215, may be erased as soon as the request for provisioning the token 230a, 230b is sent to remote server 200.

Additionally, both of the SA 220 and one or more cryptoprocessors 225a, 225b, 225n are securely installed in an area that is forbidden to the public and otherwise difficult to access. For example, the SA 220 and cryptoprocessor 225a, 225b or 225n may be installed in a service closet in a secure area, and thus much less vulnerable to physical theft. Moreover, the fact that the cryptographic keys 228a, 228b... 228n are stored not in SA 220, but instead in separate cryptoprocessors 225a, 225b... 225n, means that even were the SA 220 to be breached, the cryptographic keys 228a, 228b... 228n themselves are not vulnerable to exposure. The absence of the cryptographic keys 228a, 228b, 228n from the remote server 200 also means that, in the event of a breach of the remote server 200, the cryptographic keys are not vulnerable to exposure.

In at least some embodiments, as shown in **FIG. 2B**, an encoder device 260 can be used to perform the provisioning of the token 230b, but instead of the encoder device 260 storing the encoding information or cryptographic keys, the encoder device 260 transparently passes along the encrypted access information in much the same way as the transparent reader 235, via a secure connection 270, which may be implemented using a RS-485 communication link.

Although the connection between the SA 220 and the encoder device 260 is illustrated in **FIG. 2B** as passing through the remote server 200 and the workstation 210, it should be understood that this is only one embodiment. In certain embodiments, the link between the SA 220 (which causes the cryptoprocessors to generate the encrypted access information) and the device which provides the encrypted access information to the token 230a, 230b (e.g., the encoder device 260) may be constructed to include as few devices as possible. For instance, the SA 220 may be coupled substantially directly to the encoder device 260, for instance via USB, via RG-45, or the like. In another embodiment, the SA 220 may be coupled substantially directly to the workstation 210, which mediates the communication between the SA 220 and the encoder device 260. Other approaches are also considered.

The encoder device 260 is also operated as a type of transparent reader 235, insofar as the encoder device 260 acts as a converter which transforms electrical signals produced by SA 220 into signals transported via an electromagnetic field to the token 230b.

In an example scenario, the operation of provisioning or encoding a token 230a, 230b is triggered when an operator at workstation 210 prepares a request for provisioning the token 230a, 230b. The token may be identified by a token identifier that is included in the request. The workstation 210 may generate the request upon receiving a command from the operator; and the command may be generated by the operator pressing on an user interface (Ul) element (e.g., "Encode" button) in a security program. There may be different UI elements for different types of encoding: the operator may use different encoding options for different types of tokens 230a, 230b, different categories of users, different security levels of the users, and so on.

The generated request is then sent from the workstation 210 to the remote server 200, which is configured to generate the script 205 based on the request. The script 205 may be provided alongside or otherwise include the set of access information to be encoded, which may include an access policy and if required, the user's credential information, and any other information specified by the request from workstation 210.

The script 205 may also include a set of instructions for encoding the access information, the instructions including, for example, one or more of: selection of one or more cryptoprocessors 225a, 225b, 225n, and/or selection of one or more cryptographic keys 228a, 228b, 228n for performing the encryption of the set of access information. The script 205 may be transmitted, by the remote server 200, to the appropriate SA 220 with a command to execute the script 205. Selection of SA 220 for executing the script may be based on a variety of factors, including for example, load balancing factor, physical location of the SA 220, the selection of cryptoprocessors 225a, 225b, 225n, and/or selection of one or more cryptographic keys 228a, 228b, 228n.

In at least some embodiments, selecting the specific secure cryptoprocessor for encryption from the plurality of secure cryptoprocessors 225a, 225b, 225n is based on at least one of: a credential information received from the remote server 200, an access policy received from the remote server 200, a privilege level associated with one or more cryptographic keys 228a, 228b, 228n stored in the secure cryptoprocessor 225a, 225b, 225n, a load balancing factor, and a predetermined schedule.

In at least some embodiments, generating the encrypted access information comprises selecting the cryptographic key from a plurality of cryptographic keys 228a, 228b, 228n stored in the secure cryptoprocessor 225a, 225b, 225n based on the command received from the remote server. For example, the server 200 may include, in the script 205, identification of the appropriate cryptographic key(s) for the encoding based on: an identity of the cryptographic key (e.g., a unique ID), the version of the key to use, and the like.

In at least some embodiments, selecting the cryptographic key from the plurality of cryptographic keys 228a, 228b, 228n is based on at least one of: a credential information received from the remote server, an access policy received from the remote server, a privilege level associated the cryptographic key 228a, 228b, 228n, and a predetermined schedule.

Based on the identification of the appropriate cryptographic key(s) in the script 205, the SA 220 may specify the appropriate cryptoprocessors 225a, 225b, 225n, as the SA 220 is aware of the exact location of each cryptographic key, including in which cryptoprocessor each cryptographic key is stored. The SA 220 will then forward the set of access information as well as a selection of the cryptographic key to the appropriate cryptoprocessors 225a, 225b or 225n for encryption. The action of encryption is performed at the cryptoprocessor 225a, 225b or 225n using the identified cryptographic key, and the encrypted access information is returned to the SA 220.

In at least some embodiments, encoding or encryption may be is performed at the cryptoprocessors 225a, 225b or 225n using 128bit or 256bit AES, a form of symmetric encryption. In these cases, the cryptoprocessor 225a, 225b or 225n may store the symmetric cryptographic keys used to encrypt the information.

In at least some embodiments, encoding or encryption may be is performed at the cryptoprocessors 225a, 225b or 225n using a master cryptographic key, also called a "key-generating key", with additional data unique to the token (e.g., unique token ID) being coded. For example, a variable term for the encryption may be generated by hashing and encrypting the user ID or token ID from the encryption request sent by the SA 220.

The cryptographic keys may be symmetrical keys or asymmetrical keys (e.g., public-private keys). In the case of symmetrical keys, the same key may be used to, by the appropriate cryptoprocessors 225a, 225b, 225n, encrypt a set of access information, and to decrypt the encrypted access information back into the set of access information. In the case of asymmetrical keys (e.g., public-private keys), one or both of the server 200 or the SA 220 may keep track of the key pairs (e.g. via the key ID) needed to encrypt or decrypt a set of information. In some other cases, the tokens 230a, 230b may also be assigned a public-private key pair, which may be used as part of the encoding of the set of access information.

The encryption may be performed by the appropriate cryptoprocessor 225a, 225b or 225n with a random or pseudo-random encryption key generated by an algorithm (also stored in the cryptoprocessor), using a random or pseudo-random encryption key previously provided to the appropriate cryptoprocessor 225a, 225b or 225n, or obtained by the the appropriate cryptoprocessor 225a, 225b or 225n in any other suitable fashion.

In at least some embodiments, the SA 220 may be configured to, as part of providing the set of access information to the secure cryptoprocessor 225a, 225b, 225n, preliminarily encrypting the set of access information using a different (second) cryptographic key shared between the SA 220 and the secure cryptoprocessor 225a, 225b, 225n. This may serve to secure the communication between the SA 220 and the secure cryptoprocessor 225a, 225b or 225n, rendering it tamper-proof, or the like.

In at least some embodiments, each physical security token 230a, 230b has a unique (or pseudo-unique) ID. Some access control systems may have built-in checks that reject read responses on time scales longer than a few milliseconds. It may only take 2-3 ms for the SA 220 to send a message to a token 230a via the transparent reader 235 and receive a response, so a response that takes longer than a predefined threshold (e.g., 10 ms or more) or more might be a sign of a relay attack. Thus, in most practical cases, a SA 220 will not be presented with multiple tokens or access cards in sufficiently close succession, as to cause any confusion for provisioning the correct token 230a.

In at least some embodiments, prior to transmitting the encrypted access information to the security token reader 235 for provisioning the physical security token 230a, the SA 220 may: determine a requested token identifier from the set of access information, obtain a presented token identifier of the physical security token 230a inserted into or presented to the security token reader 235; and transmit the encrypted access information to the security token reader 235 for provisioning the physical security token 230a only when the requested token identifier matches the presented token identifier. These steps may be omitted in certain implementations, for instance in an access control system that has built-in checks that reject read responses on time scales longer than a few milliseconds. However, in a scenario where the SA 220 is presented with multiple tokens 230a, 230b for provisioning in sufficiently close succession (e.g., substantially simultaneously), these steps may assist with verification of the correct physical security token 230a prior to provisioning the physical security token 230a.

In at least some embodiments, the data communication between a transparent reader 235 and a SA 220 may involve an exchange of data that allows the token 230a and the SA 220 to perform mutual authentication, for example using asymmetric encryption. This mutual authentication uses messages that do not allow an eavesdropper to be able to obtain information that could be used by the eavesdropper to gain authenticate in the future. The result of the authentication can be used, for example, to establish a temporary or ephemeral session key that then allows the SA 220 to transmit encrypted credential data to the token 230a and vice versa. The ephemeral key can originate at either end or can be negotiated between the two ends. In one example, the cryptoprocessor 225a, 225b, 225n can make the ephemeral key available to the SA 220 by recording it in memory in said cryptoprocessor 225a, 225b, 225n.

In at least some embodiments, after a token 230a, 230b is provisioned with encoded access information for a particular user, the token 230a, 230b is then enrolled with the security system (e.g., the server 200) and associated with a given user (e.g., a real person). During this time, the token 230a, 230b is still readable by the transparent reader 235 or the encoder device 260, and the operator at the backend may take an action via the security software or similar to link the token 230a, 230b, identified by an ID number, to the given user.

In at least some embodiments, the script 205 is executed as close as possible to the transparent reader 235 that will provide the encrypted access information to the token 230a or to the encoder device 260 that will provide the encrypted access information to the token 230b. That is, the script 205 (and associated command) may be sent to the SA 220 located most close to the transparent reader 235 or the encoder device 260. However, the script 205 needs not be persistently stored in the SA 220.

In at least some embodiments, a number of predefined scripts 205 will be stored on the server200, and when the operator hits the "Encode" button at workstation 210, the workstation 210 will send a request to the server 200, which will then select and send the appropriate script 205 (based on the request from the workstation 210) along with a command to the appropriate SA 220 to execute the script 205. In some other embodiments, a number of predefined scripts 205 are stored within SA 220, and when the operator hits the "Encode" button at workstation 210, the workstation 210 will send a request to the server 200, which will then identify the relevant one of the scripts 205 and send a command (based on the request from the workstation 210) to the appropriate SA 220 to execute the script 205 already stored in SA 220. In either case, the server 200 may also provide the set of access information to SA 220, which may accompany the script 205, be provided prior to or following the transmission of the command and/or script 205, or the like. For instance, part or all of the set of access information may be already stored within the SA 220, and the command from the server 200 may indicate to the SA 220 which information to include as part of the set of access information.

A cryptoprocessor 225a, 225b, 225n may include one or more of: a secure access module (SAM), a secure element (SE), and a hardware security module (HSM). In at least some embodiments, a cryptoprocessor 225a, 225b, 225n may be any secure device used to store cryptographic keys and perform cryptographic operations, including for example, a secure access module (SAM), a hardware security module (HSM), or another type of secure element.

A cryptoprocessor 225a, 225b, 225n may include one nonvolatile memory with a small processor all built in the same tamper proof integrated circuit. The communication between a token 230a, 230b and the cryptoprocessors 225a, 225b, 225n may be mediated by the transparent reader 235 or another device (e.g., encoder device 260).

In at least some embodiments, a cryptoprocessor 225a, 225b, 225n provides for storage for the cryptographic keys 228a, 228b, 228n and algorithms that is more secure than when a regular computer platform is used, because the cryptoprocessor 225a, 225b, 225n has a tamper-proof package whose memory is not readable from the outside. In some cases, a cryptoprocessor 225a, 225b, 225n can be connected to a device that has a transparent reader 235 and PIN keypad. The cryptographic exchange between the token 230a and the cryptoprocessor 225a, 225b, 225n can be done using one or more cryptographic keys 228a, 228b, 228n that are securely stored in the cryptoprocessor 225a, 225b, 225n, and the communication can be encrypted so that no compromising eavesdropping is possible. The cryptoprocessor 225a, 225b, 225n may provide to the controller or microprocessor of the SA 220 a message that the token 230a is properly provisioned, and the SA 220 may transmit the authentication information over a bus or network connection to the server 200.

A cryptoprocessor 225a, 225b, 225n may be located a small distance from the transparent reader 235 inside of a protected premise e.g., a building. In this case, using a cryptoprocessor allows the token 230a to be securely provisioned and subsequently authenticated, and the authentication information is then sent to SA 220 or server 200 for making the decision as to whether the user of the token 230a should be granted access. The authentication information sent from the transparent reader 235 to the SA 220 or the server 200 may be encrypted to prevent interception. This may require managing cryptographic keys for that communication.

**FIG. 3** illustrates an example system architecture for server 200. As detailed herein, in at least some embodiments, server 200 includes features adapting it to perform certain specialized purposes, e.g., generating script 205 and providing the script 205 with a command to SA 220 for provisioning one or more tokens 230a, 230b.

Server 200 can include an I/O unit 302, a processor 304, communication interface 306, and data storage 320. The I/O unit 302 can enable server 200 to interconnect with one or more input devices, such as a keyboard, mouse, camera, touch screen and a microphone, and/or with one or more output devices such as a display screen and a speaker.

Server 200 can be operable to register and authenticate users (using a login, unique identifier, and password for example) prior to receiving request from workstation 210, a local network, network resources, other networks and network security devices.

Memory 308 may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Data storage devices 320 can include memory 308, databases 322, and persistent storage 324.

The processor 304 can execute instructions in memory 308 to implement aspects of processes described herein. The processor 304 can execute instructions in memory 308 to configure an encryption module 310, a decryption module 312 and other functions described herein. The processor 304 can be, for example, any type of general-purpose microprocessor or microcontroller, a digital signal processing (DSP) processor, an integrated circuit, a field programmable gate array (FPGA), a reconfigurable processor, or any combination thereof.

In at least some embodiments, server 200 is configured to delete the user identifying information from all temporary and persistent data storage devices of the server 200, workstation 210 or database 215, without permanently storing any of the user identifying information from any user or operator request. In other embodiments, server 200 may store part or all of the user identifying information in a secured database 322, in order to help with reconstruction of audit records when needed or required by law.

The encryption module 310 can be configured to generate (or retrieve from storage) the script 205 for encrypting a set of access information, as appropriate, when a request is received from workstation 210 or another approved device, as described above, for instance for secure transmission of the script 205 and/or the set of access information to the SA 220.

The decryption module 312 can be configured to decrypt communications received from the SA 220 as part of securing communications therewith. The encryption module 310 and the decryption module 312 may also be used to secure communications with other devices, including the workstation 210 and the like.

The communication interface 306 can enable server 200 to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these.

The data storage 320 may be configured to store information associated with or created by the components in memory 308 and may also include machine executable instructions. The data storage 320 includes a persistent storage 324 which may involve various types of storage technologies, such as solid state drives, hard disk drives, flash memory, and may be stored in various formats, such as relational databases, non-relational databases, flat files, spreadsheets, extended markup files, etc.

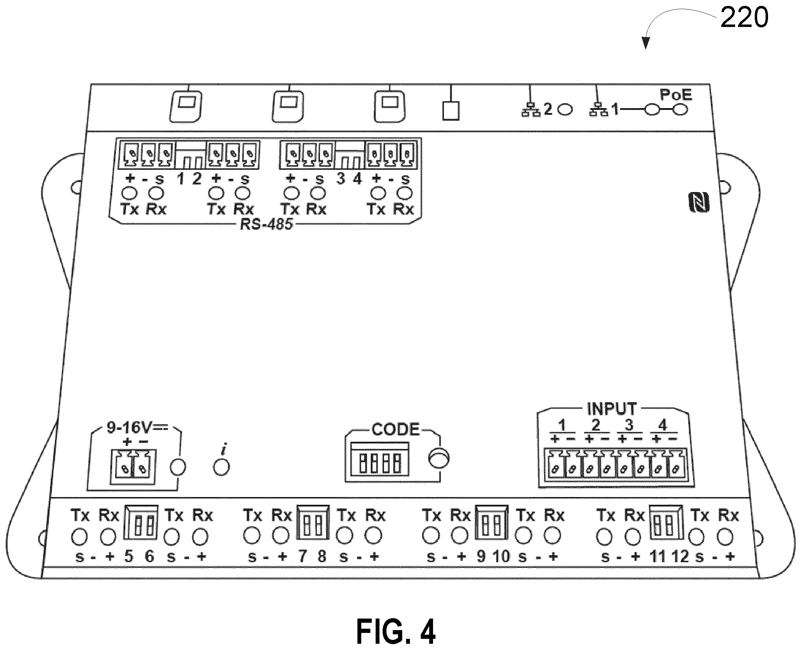

**FIG. 4** shows an example SA 220 that may be used to encrypt and provision a set of access information as shown in **FIGs. 2A** and **2B**, in accordance with an embodiment. As shown, the device 220 is compact and has various communication interfaces (e.g., Ethernet, USB, RG-45, RS-485) for connecting to a number of different transparent readers 235 or if appropriate, cryptoprocessors.

One category of SA 220 is referred to using the term "computer appliance", which is generally provided to an operating party for implementing specific tasks or for providing specific resources as a closed or sealed system. Once deployed, the SA 220 may be used as provided, but may occasionally require intervention by the manufacturer, distributor, or other entity responsible for the SA 220 for maintenance or other operations.

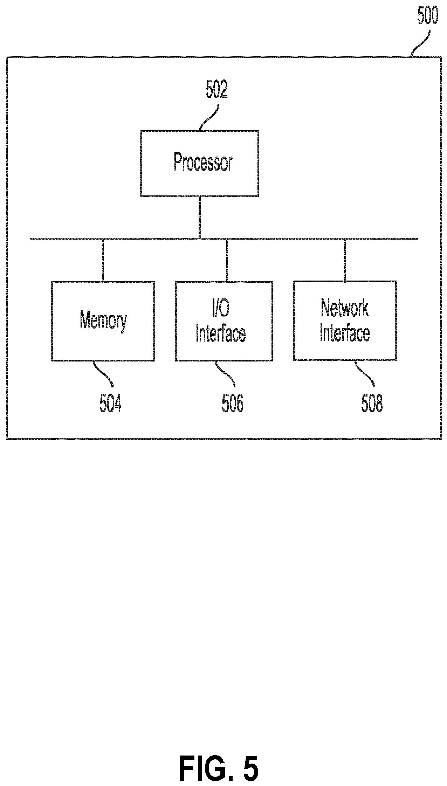

**FIG. 5** shows a schematic diagram of an example computing device 500 that can be used to implements an SA 220 in **FIG. 4** to encrypt and provision a set of access information, in accordance with another embodiment. As depicted, computing device 500 includes one or more processors 502, memory 504, one or more I/O interfaces 506, and one or more network interfaces 508.

Each processor 502 may be, for example, a microprocessor or microcontroller, a digital signal processing (DSP) processor, an integrated circuit, a field programmable gate array (FPGA), a reconfigurable processor, a programmable read-only memory (PROM), or any combination thereof.

Memory 504 may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 304 may store code executable at processor 502, which causes server 200 to function in manners disclosed herein. Memory 504 includes a data storage. In at least some embodiments, the data storage includes a secure datastore. In at least some embodiments, the data storage stores received data sets, such as textual data, image data, or other types of data.

Each I/O interface 506 enables computing device 500 to interconnect with one or more input devices, such as a keyboard, mouse, camera, touch screen and a microphone, or with one or more output devices such as a display screen and a speaker.

Each network interface 508 enables computing device 500 to communicate with other components, to exchange data with other components, to access and connect to network resources, to serve applications, and perform other computing applications by connecting to a network such as network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these. An example interface 508 may be an interface for RS-485 communication link.

Many varieties of SA 220 may exist. SAs 220 are generally self-contained devices providing their own physical computing resources, which may include a processor 502, one or more memories 504, and one or more networking interfaces 508, which may be coupled together in any suitable fashion to permit the operation of the SA 220. The SA 220 may be connected to one or more networks via the networking interface 508, which may include one or more internal networks (e.g., an intranet), one or more external networks (e.g., the Internet), or any suitable combination thereof.

In at least some embodiments, the SA 220 may include a casing or other container within which the physical computing resources of the SA 220 are contained. In the embodiment shown in **FIG. 4**, the SA 220 also includes one or more interactive elements, such as a power button, and one or more indicators. The power button may allow an operator to selectively place the SA 220 in an on or off state, and the indicators may include, for instance, status lights to indicate various information about the operating state of the SA 220. In at least some embodiments, in addition to the network interface 508, the SA 220 may include one or more media interfaces via which removable media, for instance a USB drive, may be coupled to the SA 220.

SA 220s are typically deployed for a particular task or purpose. By way of an example, the SA 220 may be deployed to manage a group of access control devices coupled to the SA 220: the access control devices may include access card readers, electronic locks, door controllers, and the like, each of which is coupled to the SA 220. The SA 220 may then control the access control devices, monitor the operation of the access control devices, and/or report information about the operation of the access control devices to a server or other system, for instance via a network. In other settings, the SA 220 may be used to manage a data repository, to manage networks, network security, firewalls, and the like; other use cases for SA 220s are also considered. Additionally, it should be understood that although the present disclosure primarily describes embodiments relating to secure appliances, the methods, systems, and other aspects of the present disclosure may relate to other types of computing devices.

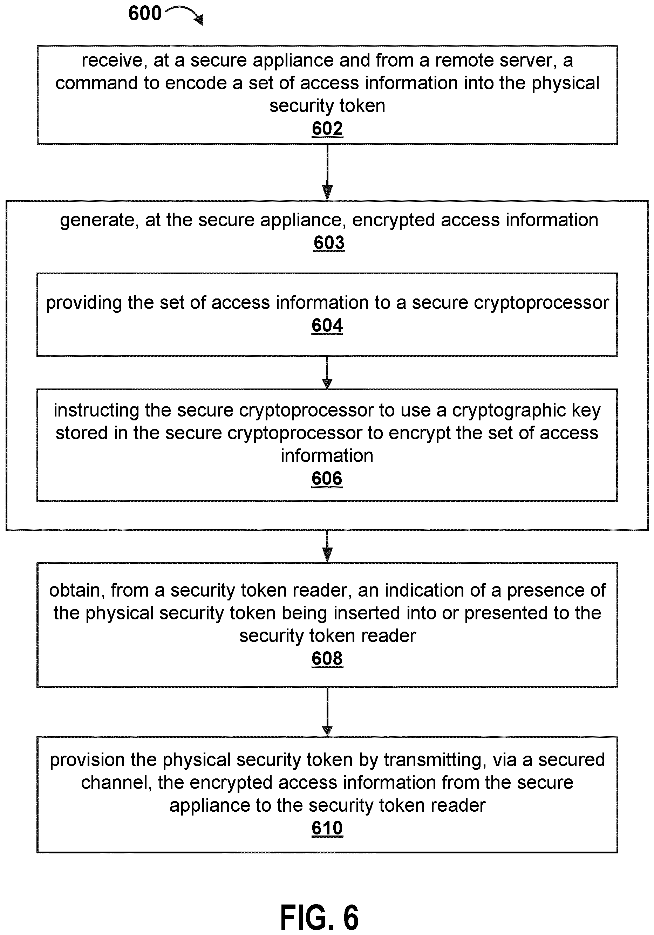

**FIG. 6** shows an example process 600 performed by SA 220 in **FIGs. 2A****,** **2B** and **4** (or the system 500 in **FIG. 5**), in accordance with an embodiment. At operation 602, the SA 220 may receive, from a remote server 200, a command to encode a set of access information into the physical security token 230a, 230b. In at least some embodiments, the SA 220 also receives the part or all of set of access information from the remote server 200.

At operation 603, the SA 220 may generate, at the SA 220, encrypted access information, which may include, at sub-operation 604, providing the set of access information to a secure cryptoprocessor 225a, 225b, 225n, and at sub-operation 606, instructing the secure cryptoprocessor 225a, 225b, 225n to use a cryptographic key 228a, 228b, 228n stored in the secure cryptoprocessor 225a, 225b, 225n to encrypt the set of access information. In this fashion, the SA 220 obtains an encrypted version of the set of access information using the secure cryptoprocessor 225a, 225b, 225n, but does not itself perform the encryption.

At operation 608, the SA 220 may obtain, from a security token reader, e.g., the transparent reader 235, an indication of a presence of the physical security token 230a being inserted into or presented to the security token reader 235. In at least some embodiments, obtaining the indication comprises obtaining an indication that the physical security token 230a is located within a reading zone of the transparent reader 235. In some other embodiments, obtaining the indication comprises obtaining an indication that the physical security token 230a is located in proximity to the transparent reader 235.

In at least some embodiments, the security token reader 235 may be operating in a transparent mode.

In at least some embodiments, the security token reader 235 may be an encoder device 260 coupled to a workstation 210.

At operation 610, the SA 220 may provision the physical security token 230a, 230b by transmitting, via a secured channel 250, the encrypted access information to the security token reader 235 for encoding the token 230a. The transparent reader 235, in response to receiving the encrypted access information, acts as a converter which transforms electrical signals produced by the SA 220 into signals transported via an electromagnetic field to the token 230a. In this fashion, the SA 220 and the token 230a are capable of communication substantially directly, with the transparent reader 235 solely converting the medium of communication. In at least some embodiments, operation 610 is performed in response to obtaining the indication of the presence of the physical security token 230a, obtained as part of operation 608. For instance, the process 600 may hold at step 603 until the indication of the presence of the physical security token 230a is obtained at operation 608.

In at least some embodiments, the secure cryptoprocessor 225a, 225b, 225n may be a secure access module (SAM) providing storage for the cryptographic key 228a, 228b, 228n.

In at least some embodiments, receiving the command to encode the set of access information comprises receiving the set of access information from the remote server 200.

In at least some embodiments, the received set of access information is arranged in a predetermined structure for encoding. The predetermined structure may include, for example, a structure optimized for encryption. The structure may be an XML table, for example, listing each of one or more user credential data items and each of one or more access policy data items. The server 200 may prepare the set of access information in the structure prior to sending the structured set of access information to SA 220.

In at least some embodiments, receiving the set of access information comprises receiving a set of user credential information and an access policy.

In at least some embodiments, part or all of the set of access information may be received as part of, or accompanying, a script 205 generated by the server 200.

In at least some embodiments, providing the set of access information to the secure cryptoprocessor 225a, 225b, 225n comprises placing the set of access information on a bus 245 of the secure appliance 220 via which the secure cryptoprocessor 225a, 225b, 225n is coupled to secure appliance 220.

In at least some embodiments, providing the set of access information to the secure cryptoprocessor 225a, 225b, 225n comprises transmitting the set of access information to the secure cryptoprocessor 225a, 225b, 225n over a network.

In at least some embodiments, providing the set of access information to the secure cryptoprocessor 225a, 225b, 225n comprises preliminarily encrypting the set of access information by the secure appliance using a second cryptographic key shared between the secure appliance and the secure cryptoprocessor.

In at least some embodiments, provisioning the physical security token 230a is performed without the security token reader 235 storing any of the encrypted access information.

In at least some embodiments, generating the encrypted access information comprises selecting the secure cryptoprocessor from a plurality of secure cryptoprocessors 225a, 225b, 225n available to the secure appliance 220 based on the command received from the remote server 200.

In at least some embodiments, selecting the secure cryptoprocessor from the plurality of secure cryptoprocessors 225a, 225b, 225n is further based on at least one of: a credential information received from the remote server, an access policy received from the remote server, a privilege level associated with one or more cryptographic keys stored in the secure cryptoprocessor 225a, 225b, 225n, a load balancing factor, and a predetermined schedule.

In at least some embodiments, generating the encrypted access information comprises selecting the cryptographic key from a plurality of cryptographic keys 228a, 228b, 228n stored in the secure cryptoprocessor 225a, 225b, 225n based on the command received from the remote server.

In at least some embodiments, selecting the cryptographic key from the plurality of cryptographic keys 228a, 228b, 228n is further based on at least one of: a credential information received from the remote server, an access policy received from the remote server, a privilege level associated the cryptographic key 228a, 228b, 228n, and a predetermined schedule.

In at least some embodiments, the security token reader 235 is installed at an access control point at an entrance to: a building, a floor, or a room.

In at least some embodiments, the security token reader 235 is coupled to a computing device 210 connected to the remote server 200.

In at least some embodiments, the SA 220 may issue a command to the security token reader 235 to instruct the security token reader to operate in a transparent mode.

Operations 602 to 610 may be performed for each request in the plurality of provisioning requests received from the workstation 210.

In accordance with yet another aspect, an process for provisioning a security token 230a may include: providing a security token reader 235 programmed to operate in a transparent mode; providing a server 200 executing security software; providing a secure appliance (SA) 220 coupled to the security token reader 235 and the server 200, the secure appliance 220 having access to a secure cryptoprocessor 225a, 225b, or 225n for encrypting information; obtaining, at the server 200, a request to encode a physical security token 230a to be assigned to a user; sending, from the server 200 to the secure appliance 220, a command to encode a set of access information into the physical security token 230a; generating, at the secure appliance 220, encrypted access information based on the set of access information using a cryptographic key 228a, 228b or 228n stored in the secure cryptoprocessor 225a, 225b, or 225n; in response to obtaining an indication from the security token reader 235 of a presence of the physical security token 230a being inserted into or presented to the security token reader 235, transmitting the encrypted access information from the secure appliance 220 to the security token reader 235; and transparently transmitting the encrypted access information from the security token reader 235 to the physical security token 230a for encoding of the encrypted access information within the physical security token 230a.

In at least some embodiments, the secure cryptoprocessor 225a, 225b, 225n may be a secure access module (SAM) providing storage for the cryptographic key 228a, 228b or 228n.

In at least some embodiments, the set of access information is arranged in a predetermined structure for encoding.

In at least some embodiments, sending the set of access information comprises sending a set of credential information and an access policy.

In at least some embodiments, generating the encrypted access information may include: providing the set of access information to the secure cryptoprocessor 225a, 225b, 225n; and instructing the secure cryptoprocessor 225a, 225b, 225n to use the cryptographic key 228a, 228b or 228n stored in the secure cryptoprocessor to encrypt the set of access information.

In at least some embodiments, providing the set of access information to the secure cryptoprocessor 225a, 225b, 225n comprises preliminarily encrypting the set of access information by the secure appliance 220 using a second cryptographic key shared between the secure appliance and the secure cryptoprocessor.

In at least some embodiments, encoding the physical security token 230a is performed without the security token reader 235 storing any of the encrypted access information.

In at least some embodiments, generating the encrypted access information comprises selecting the secure cryptoprocessor from a plurality of secure cryptoprocessors 225a, 225b, 225n available to the secure appliance based on the command received from the remote server 200.

In at least some embodiments, generating the encrypted access information comprises selecting the cryptographic key from a plurality of cryptographic keys 228a, 228b, 228n stored in the secure cryptoprocessor 225a, 225b or 225n based on the command received from the remote server 200.

In at least some embodiments, selecting the cryptographic key from the plurality of cryptographic keys 228a, 228b, 228n is further based on at least one of: a credential information received from the remote server, an access policy received from the remote server, a privilege level associated the cryptographic key 228a, 228b or 228n, and a predetermined schedule.

In at least some embodiments, the security token reader 235 is coupled to a computing device 210 connected to the remote server 200.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In at least some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the disclosure, numerous references will be made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The disclosure provides many example embodiments. Although each embodiment represents a single combination of inventive elements, other examples may include all possible combinations of the disclosed elements. Thus if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The embodiments and examples described herein are illustrative and non-limiting. Practical implementation of the features may incorporate a combination of some or all of the aspects, and features described herein should not be taken as indications of future or existing product plans. Applicant partakes in both foundational and applied research, and in some cases, the features described are developed on an exploratory basis.

Although the embodiments have been described in detail, it should be understood that various changes, substitutions and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A computer-implemented method (600) of securely provisioning a physical security token (230a), comprising:
receiving, at a secure appliance (220) and from a remote server (200), a command to encode a set of access information into the physical security token (230a);
generating, at the secure appliance (220), encrypted access information, comprising:
providing the set of access information to a secure cryptoprocessor (225a, 225b, 225n); and
instructing the secure cryptoprocessor (225a, 225b, 225n) to use a cryptographic key (228a, 228b, 228n) stored in the secure cryptoprocessor (225a, 225b, 225n) to encrypt the set of access information;
obtaining, from a security token reader (235), an indication of a presence of the physical security token (230a) being inserted into or presented to the security token reader (235); and
provisioning the physical security token (230a) by transmitting, via a secured channel (250), the encrypted access information from the secure appliance (220) to the security token reader (235) for encoding the physical security token (230a) with the encrypted access information..

2. The computer-implemented method of claim 1, wherein receiving the command to encode the set of access information comprises receiving the set of access information from the remote server (200); and
optionally wherein receiving the set of access information comprises receiving a set of credential information and an access policy.

3. The computer-implemented method of claim 1 or claim 2, wherein the received set of access information is arranged in a predetermined structure for encoding.

4. The computer-implemented method of any one of claims 1 to 3, wherein providing the set of access information to the secure cryptoprocessor (225a, 225b, 225n) comprises placing the set of access information on a bus of the secure appliance (220) via which the secure cryptoprocessor (225a, 225b, 225n) is coupled to secure appliance (220).

5. The computer-implemented method of any one of claims 1 to 4, wherein providing the set of access information to the secure cryptoprocessor (225a, 225b, 225n) comprises transmitting the set of access information to the secure cryptoprocessor (225a, 225b, 225n) over a network.

6. The computer-implemented method of any one of claims 1 to 5, wherein providing the set of access information to the secure cryptoprocessor (225a, 225b, 225n) comprises preliminarily encrypting the set of access information by the secure appliance (220) using a second cryptographic key (228a, 228b, 228n) shared between the secure appliance (220) and the secure cryptoprocessor (225a, 225b, 225n).

7. The computer-implemented method of any one of claims 1 to 6, wherein provisioning the physical security token (230a) is performed without the security token reader (235) storing any of the encrypted access information.

8. The computer-implemented method of any one of claims 1 to 7, wherein generating the encrypted access information comprises selecting the secure cryptoprocessor (225a, 225b, 225n) from a plurality of secure cryptoprocessors available to the secure appliance (220) based on the command received from the remote server (200); and
optionally wherein selecting the secure cryptoprocessor (225a, 225b, 225n) from the plurality of secure cryptoprocessors is further based on at least one of: a credential information received from the remote server (200), an access policy received from the remote server (200), a privilege level associated with one or more cryptographic keys (228a, 228b, 228n) stored in the secure cryptoprocessor, a load balancing factor, and a predetermined schedule.

9. The computer-implemented method of any one of claims 1 to 8, wherein generating the encrypted access information comprises selecting the cryptographic key (228a, 228b, 228n) from a plurality of cryptographic keys stored in the secure cryptoprocessor (225a, 225b, 225n) based on the command received from the remote server (200); and
optionally wherein selecting the cryptographic key (228a, 228b, 228n) from the plurality of cryptographic keys is further based on at least one of: a credential information received from the remote server (200), an access policy received from the remote server (200), a privilege level associated the cryptographic key (228a, 228b, 228n), and a predetermined schedule.

10. The computer-implemented method of any one of claims 1 to 9, further comprising, prior to transmitting the encrypted access information to the security token reader (235) for provisioning the physical security token (230a):
determining a requested token identifier from the set of access information;
obtaining a presented token identifier of the physical security token (230a) inserted into or presented to the security token reader (235); and
transmitting the encrypted access information to the security token reader (235) for provisioning the physical security token (230a) only when the requested token identifier matches the presented token identifier.

11. The computer-implemented method of any one of claims 1 to 10, wherein provisioning the physical security token (230a) comprises instructing the security token reader (235) to transmit the encrypted access information to the physical security token (230a) unchanged.

12. The computer-implemented method of any one of claims 1 to 11, comprising, prior to provisioning the physical security token (230a), issuing a command from the secure appliance (220) to the security token reader (235) to instruct the security token reader (235) to operate in a transparent mode.

13. A computer-implemented system (220) for provisioning a physical security token, comprising:
a communication interface (508);
at least one processor (502);
memory (504) in communication with said at least one processor (502); and
instructions stored in said memory (504), which when executed at said at least one processor (502) causes said system (220) to:
receive, at a secure appliance (220) and from a remote server (200), a command to encode a set of access information into the physical security token (230a);
generate, at the secure appliance (220), encrypted access information, comprising:
providing the set of access information to a secure cryptoprocessor (225a, 225b, 225n); and
instructing the secure cryptoprocessor (225a, 225b, 225n) to use a cryptographic key (228a, 228b, 228n) stored in the secure cryptoprocessor (225a, 225b, 225n) to encrypt the set of access information;
obtain, from a security token reader (235), an indication of a presence of the physical security token (230a) being inserted into or presented to the security token reader (235); and
provision the physical security token (230a) by transmitting, via a secured channel (250), the encrypted access information from the secure appliance (220) to the security token reader (235) for encoding the physical security token (230a) with the encrypted access information.

14. The system of claim 13, wherein receiving the command to encode the set of access information comprises receiving the set of access information from the remote server (200); and
optionally wherein receiving the set of access information comprises receiving a set of credential information and an access policy.

15. The system of claim 14 or 15, wherein the received set of access information is arranged in a predetermined structure for encoding.

16. The system of any one of claims 13 to 15, wherein provisioning the physical security token (230a) is performed without the security token reader (235) storing any of the encrypted access information.

17. The system of any one of claims 13 to 16, wherein generating the encrypted access information comprises selecting the secure cryptoprocessor (225a, 225b, 225n) from a plurality of secure cryptoprocessors available to the secure appliance (220) based on the command received from the remote server (200); and
optionally wherein selecting the secure cryptoprocessor (225a, 225b, 225n) from the plurality of secure cryptoprocessors is further based on at least one of: a credential information received from the remote server (200), an access policy received from the remote server (200), a privilege level associated with one or more cryptographic keys (228a, 228b, 228n) stored in the secure cryptoprocessor (225a, 225b, 225n), a load balancing factor, and a predetermined schedule.

18. The system of any one of claims 13 to 17, wherein generating the encrypted access information comprises selecting the cryptographic key (228a, 228b, 228n) from a plurality of cryptographic keys stored in the secure cryptoprocessor (225a, 225b, 225n) based on the command received from the remote server (200); and optionally wherein selecting the cryptographic key (228a, 228b, 228n) from the plurality of cryptographic keys is further based on at least one of: a credential information received from the remote server (200), an access policy received from the remote server (200), a privilege level associated the cryptographic key (228a, 228b, 228n), and a predetermined schedule.

19. A method for securely provisioning a physical security token, comprising:
providing a security token reader (235) programmed to operate in a transparent mode;
providing a remote server (200) executing security software;
providing a secure appliance (220) coupled to the security token reader (235) and the remote server (200), the secure appliance (220) having access to a secure cryptoprocessor (225a, 225b, 225n) for encrypting information;
obtaining, at the remote server (200), a request to encode a physical security token (230a) to be assigned to a user;
sending, from the remote server (200) to the secure appliance (220), a command to encode a set of access information into the physical security token (230a);
generating, at the secure appliance (200), encrypted access information based on the set of access information using a cryptographic key (228a, 228b, 228n) stored in the secure cryptoprocessor (225a, 225b, 225n);
in response to obtaining an indication from the security token reader (235) of a presence of the physical security token (230a) being inserted into or presented to the security token reader (235), transmitting the encrypted access information from the secure appliance (220) to the security token reader (235); and
transparently transmitting the encrypted access information from the security token reader (235) to the physical security token (230a) for encoding of the encrypted access information within the physical security token (230a).
